# EUROPÄISCHE PATENTSCHRIFT

(11) **EP 0 537 503 B1**
(45) Veröffentlichungstag und Bekanntmachung des Hinweises auf die Patenterteilung: **10.04.1996**
(21) Anmeldenummer: 92116080.0
(22) Anmeldetag: 21.09.1992
(51) Int. Cl.: F04D 29/54, F04D 29/66, F01D 25/06

(54) **Vorrichtung und Verfahren zum Reduzieren einer oder mehrerer resonanter Schwingungen von Laufschaufeln in Turbomaschinen**
Device and method for damping one or more resonant vibrations of turbomachine blades
Dispositif et procédé pour réduire une ou plusieurs vibrations des aubes de turbomachines

(30) Priorität: 17.10.1991 CH 3045/91
(43) Veröffentlichungstag der Anmeldung: 21.04.1993
(73) Patentinhaber: ASEA BROWN BOVERI AG, CH-5401 Baden (CH)
(72) Erfinder: Bothien, Mihajlo-Rüdiger, Dr., W-7890 Waldshut-Tiengen 2 (DE); Wüthrich, Christian, Dr., CH-5442 Fislisbach (CH)

(56) Entgegenhaltungen:
- GB-A- 2 090 334
- US-A- 4 540 335

## Beschreibung

Die Erfindung betrifft eine Vorrichtung zum Reduzieren einer oder mehrerer resonanter Schwingungen von Laufschaufeln in Turbomaschinen gemäss Oberbegriff der Patentansprüche 1 und 2. Sie bezieht sich auch auf ein Verfahren zum Erstellen und Betreiben der Vorrichtung.

In Turbomaschinen wie Turbinen, Verdichtern, Turbopumpen und Lüftern sowohl der axialen als auch der radialen Bauart werden die Laufschaufeln durch Ungleichmässigkeiten in der Strömung zu Schwingungen angeregt. Stimmen die Drehzahl oder die Drehzahlvielfachen des Läufers mit der Eigenfrequenz einer Laufschaufel überein, so können Resonanzschwingungen und damit hohe mechanische Beanspruchungen auftreten, welche die Lebensdauer der Schaufeln in unzulässiger Weise verkürzen können. Bei Maschinen mit variabler Drehzahl muss jederzeit mit dem Auftreten von Resonanzen gerechnet werden. Aber auch bei Maschinen mit konstanter Betriebsdrehzahl liegen die Resonanzdrehzahlen in der Regel so tief, dass beim An- und Abfahren mehrere Resonanzen durchlaufen werden müssen.

### Stand der Technik

Eingangs genannte Vorrichtungen in Form von Kavitäten sind bekannt aus der GB-A-2090334. Sie dienen allerdings dort nicht zum Tilgen von erzwungenen Schwingungen, sondern zum Dämpfen von Flatterschwingungen, also selbsterrregten Schwingungen, deren Frequenz in der Regel nicht mit der Vielfachen der Drehfrequenz zusammenfällt. Hierzu müssen die Kavitäten so dimensioniert und abgestimmt werden, dass die Resonanzfrequenz mit der Flatterfrequenz übereinstimmt. Die Anordnung der Kavitäten über dem Umfang der Wandung kann dabei beliebig sein.

Eingangs genannte Vorrichtungen in Form von genau definierten Schlitzen in der Gehäusewandung sind auch bekannt aus der US-A-4,540,335. Sie dienen allerdings nicht zum Tilgen von erzwungenen Schwingungen, sondern zum Vermeiden von Verdichterinstabilitäten, indem sie die Strömung an den Schaufelblattspitzen verbessern und damit die "Stall"-Instabilität vermeiden sollen. Schaufelschwingungen werden dadurch nicht beeinflusst.

### Darstellung der Erfindung

Der Erfindung liegt die Aufgabe zugrunde, Mittel zur Störung der Strömung zu schaffen, welche zur gezielten Beeinflussung festgestellter Resonanzen herangezogen werden können.

Erfindungsgemäss wird dies bei Vorrichtungen der eingangs genannten Art durch die kennzeichnenden Merkmale der Patentansprüche 1 oder 2 erreicht.

Die Erfindung geht dabei von dem Grundgedanken aus, dass über konkrete Modifikationen in der Gehäusewandung die Schaufeln eine Zusatzerregung erfahren, welche, sofern sie im Betrag und in der Phase richtig gewählt ist, die Amplituden der Schwingungen in einer oder mehreren Resonanzen wesentlich zu reduzieren vermag.

Die Vorteile der Erfindung sind unter anderem in der Einfachheit der neuen Massnahme zu sehen sowie darin, dass bestehende Maschinen ohne weiteres mit den Störmitteln nachgerüstet werden können. Daneben ist durch die Anordnung von Kavitäten nicht mit einer wesentlichen Wirkungsgrad-Beeinträchtigung zu rechnen.

Die in Form von Bohrungen oder Nuten angeordneten Kavitäten können sowohl einseitig geschlossen sein oder die Gehäusewandung vollständig durchdringen und nach außen hin offen sein. In letzterem Fall bietet es sich an, die Möglichkeit vorzusehen, mit einem gasförmigen Mittel auf die Laufschaufelspitzen zu blasen, um das Mass der Zusatzanregung variieren zu können.

Ein Verfahren zum Einrichten und zum Betreiben der Vorrichtung zeichnet sich dadurch aus, dass die die Resonanz verursachende Drehfrequenz ermittelt wird, und dass bei einer zu unterdrückenden Schaufelschwingung, die mit der k-ten Drehfrequenz des Läufers angeregt wird, die die Strömung störenden Kavitäten so über den Umfang verteilt werden, dass eine Anregung mit der k-ten Vielfachen der Drehfrequenz erfolgt, wobei die Winkellagen der in Umfangrichtung aufeinanderfolgenden Kavitäten in der Summe so gewählt werden, dass die Schaufelschwingungen reduziert werden.

### Kurze Beschreibung der Zeichnung

In der Zeichnung sind mehrere Ausführungsbeispiele der Erfindung schematisch dargestellt.

Es zeigen:
- Fig. 1A - 1D: je einen Teillängsschnitt durch die Laufbeschaufelung einer axial durchströmten Turbomaschine mit verschiedenen Ausführungsformen;
- Fig. 2A - 3B: die teilweise Abwicklung eines Zylinderschnittes auf dem Aussendurchmesser des durchströmten Ringkanals mit verschiedenen Ausführungsformen;
- Fig. 4: einen Teillängsschnitt durch die Laufbeschaufelung einer radial durchströmten Turbomaschine;
- Fig. 5A - 5C: Zeigerdiagramme im Zusammenhang mit der Schwingung 5ter Ordnung;
- Fig. 6A - 6B: Zeigerdiagramme im Zusammenhang mit der Schwingung 24ter Ordnung;
- Fig. 7: ein Ausführungsbeispiel anhand der Abwicklung eines Querschnitts durch die Ebene der Kavitäten;
- Fig. 8A - 9: Zeigerdiagramme zum Beispiel nach Fig. 7.

### Weg zur Ausführung der Erfindung

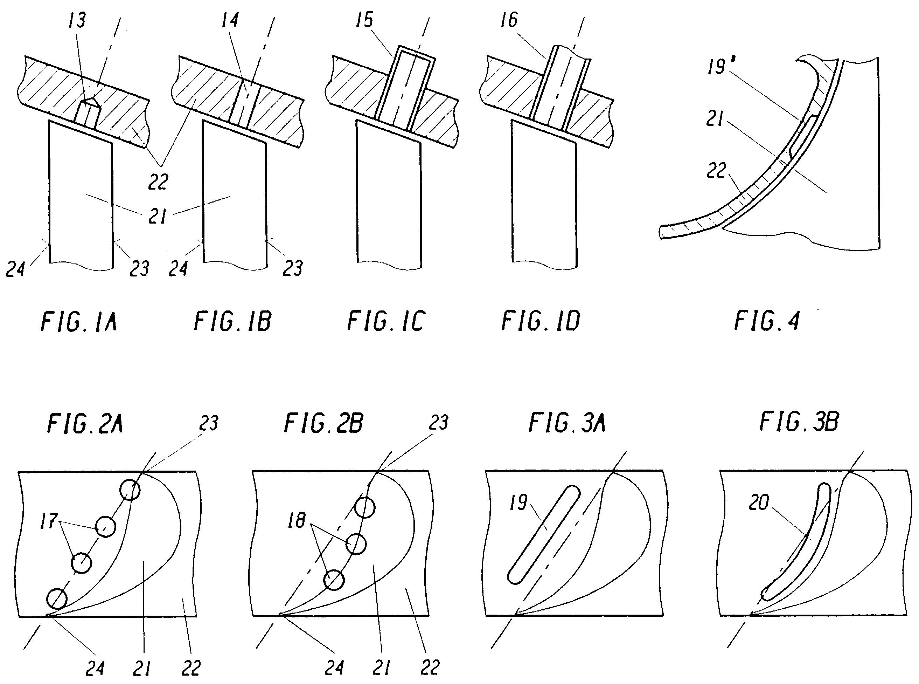

In der Zeichnung sind nur die für das Verständnis der Erfindung wesentlichen Elemente gezeigt. Gleiche Teile sind in den verschiedene Fig. jeweils mit denselben Bezugszeichen versehen. Im Falle der Fig. 1 bis 4 sind dies die Laufschaufeln 21 und die den durchströmten Kanal begrenzenden Gehäusewandungen 22. Im Beispielsfall handelt es sich bei den Fig. 1 bis 3 um Turbinenschaufeln, die mit Spitze gegen eine konische Kanalkontur dichten. Mit 23 sind die entsprechenden Eintrittskanten und mit 24 die Austrittskanten der Schaufeln bezeichnet. Diese Kanten sind bei der Radialmaschine nach Fig. 4 infolge der nur teilweisen Darstellung der Laufschaufel 21 nicht ersichtlich.

In den Fig. 1A bis 1D sind die Kavitäten in Form von zylindrischen Bohrungen ausgeführt, welche senkrecht zur konischen Kanalkontur verlaufen. Dieser senkrechte Verlauf ist selbstverständlich nicht zwingend. Der zum Strömungskanal gerichtete offene Querschnitt der Kavitäten liegt jeweils innerhalb der Mantelfläche, welche von den Axialebenen der Eintrittskanten 23 und der Austrittskanten 24 begrenzt ist. Sofern es sich bei den Laufschaufeln um verjüngte Profile handelt, sind diese Axialebenen durch die jeweiligen Kanten an der Schaufelspitze bestimmt.

Die Bohrung gemäss Fig. 1A ist ein einfaches Sackloch 13. In der Regel wird die Bohrung mit einem nichtdargestellten Innengewinde versehen sein, in welches ein Bolzen zum Verschliessen der Bohrung einschraubbar ist.

Die Bohrung gemäss Fig. 1B ist ein Durchgangsloch 14. Diese Lösung kann mit Vorteil in Maschinen angewendet werden, in denen zwischen Strömungskanal und Aussenwand des Gehäuses nur geringe Druckunterschiede vorherrschen, wie dies beispielsweise bei Lüftern der Fall ist.

Die Kavität gemäss Fig. 1C besteht ebenfalls aus einem Durchgangsloch, in welches ein aussen geschlossenes Rohr 15 eingesetzt ist. Diese Variante könnte bei Maschinen mit dünnwandigen Gehäusen zur Anwendung gelangen oder in Fällen, bei denen ein bestimmtes geschlossenes Kavitätenvolumen sich als notwendig erweisen würde.

In Abweichung zur letztgenannten Variante zeigt Fig. 1D ein Durchgangsloch, in welches ein aussen offenes Rohr 16 eingesetzt ist. Hier bietet sich die Möglichkeit an, nichtgezeigte Gasanschlüsse vorzusehen und eine, mehrere oder alle über dem Umfang verteilten Kavitäten mit einem gasförmigen Medium zu beblasen. Entsprechende Versuche bei einer Axialturbine haben die Funktionsfähigkeit dieser Massnahme bestätigt. In der untersuchten Maschine wurde bei einer bestimmten Rotordrehzahl eine Resonanz festgestellt, die durch das Fünffache der Rotordrehzahl erregt wurde. Durch lediglich drei Bohrungen wurde in der Folge Pressluft eingeblasen. Der eingeblasene Luftstrom wurde so lange gesteigert, bis die Amplitude der ersten Eigenfrequenz der Laufschaufeln bei Erregung mit der fünffachen Drehzahl auf 30% des ursprünglichen Wertes und damit auf ein zulässiges Mass zurückging.

Gemäss Fig. 2A sind die Kavitäten paketweise angeordnete Bohrungen. Ein Paket weist mehrere Einzelbohrungen 17 auf, die in Richtung der strichpunkierten Sehne der Laufschaufeln auf einer Linie gestaffelt sind. In Abweichung hierzu zeigt Fig. 2B eine Lösung, bei der die Einzelbohrungen 18 zwar auch in Sehnenrichtung der Schaufeln verlaufen, ihre Zentren jedoch auf einer Kurve gestaffelt sind. Vorzugsweise entspricht der Kurvenverlauf der Schaufelprofilform an der Druckseite.

In Fig. 3A sind die paketweise angeordneten Einzelbohrungen nach Fig. 2A durch eine gerade Nut 19 ersetzt, deren Achse sich in Sehnenrichtung der Laufschaufeln erstreckt. Als Variante hierzu zeigt Fig. 3B eine gekrümmte Nut 20, deren Krümmungsverlauf wiederum der Profilform der Schaufeldruckseite entspricht.

Die Fig. 4 zeigt das Anwendungsbeispiel von geraden Nuten 19' bei einem Radialverdichter. In dessen Gehäusewandung 22, hier ein Abdeckring, wurden im Winkelabstand von jeweils 60° 6 derartige Nuten eingefräst, die entsprechend der Schaufelkontur orientiert wurden. Durch Versuche wurden Winkellage und Tiefe der Nuten so variert, dass die Amplitude der Schaufelschwingung bei Erregung mit der sechsfachen Drehfrequenz auf weniger als 20% des ursprünglichen Wertes reduziert wurde.

Die physikalische Begründung für die von den Kavitäten verursachte Zusatzerregung ist darin zu sehen, dass beim Passieren der Kavität zwischen der Druckseite und der Saugseite der Schaufelspitze kurzfristig ein teilweiser Druckausgleich stattfindet. Dadurch erfährt die Schaufelspitze jeweils einen kurzen Stoss.

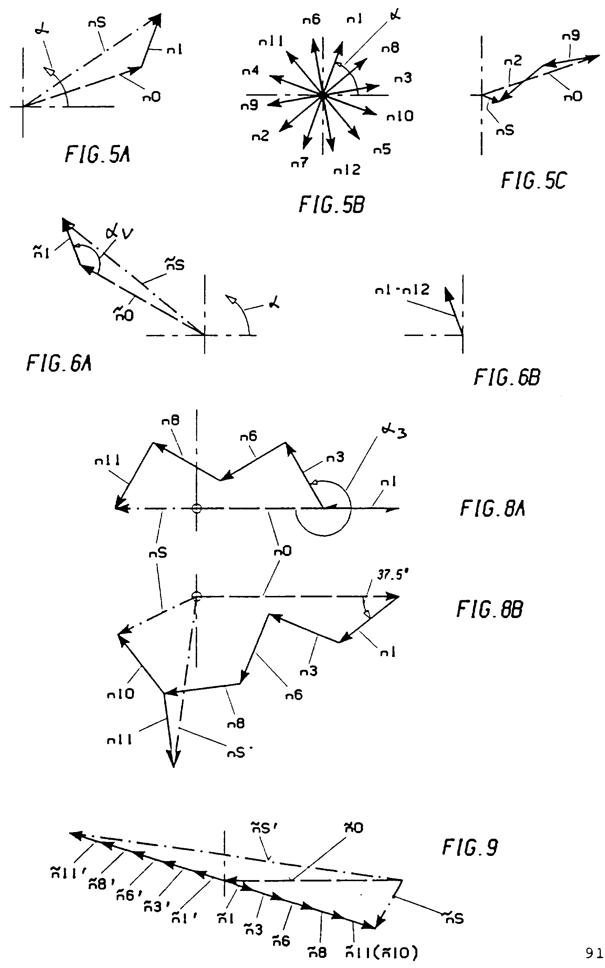

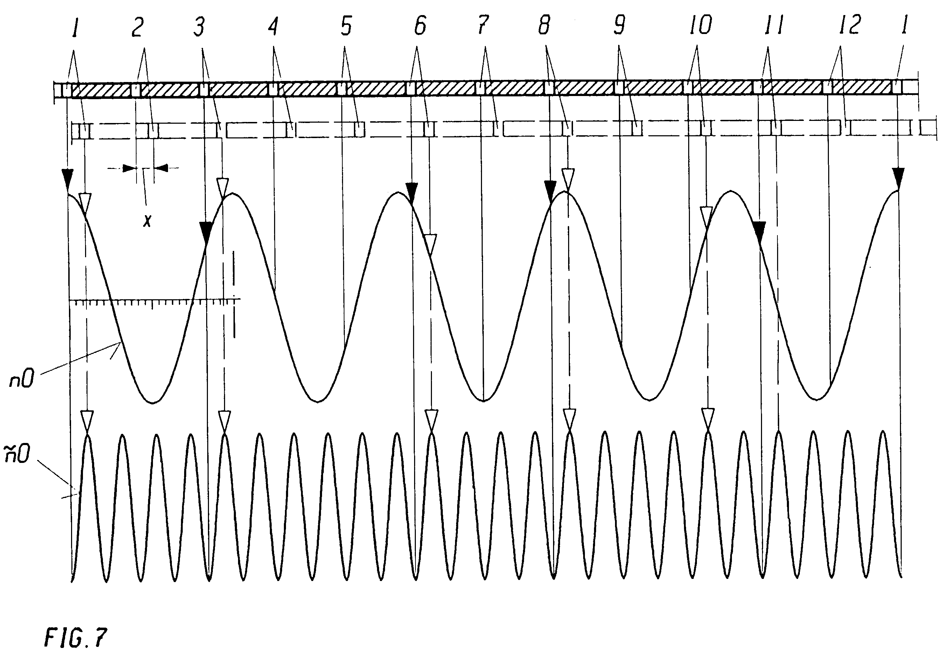

Wie die Auswahl der die Strömung störenden Mittel bei einer gegebenen Laufradbeschaufelung zu geschehen hat, sei nachstehend anhand der Zeigerdiagramme in den Fig. 5A bis 6B sowie der Prinzipskizzen in den Fig. 7 bis 8B erläutert. Vorausgesetzt wird eine Anordnung mit 12 gleichmässig über dem Umfang angeordneten Bohrungen gemäss Fig. 1A. Über dem Umfang sind die Bohrungen aufeinanderfolgend von 1 bis 12 durchnumeriert. Es versteht sich, dass auf die Bekanntgabe von Absolutwerten hier verzichtet werden muss, da diese infolge ihrer Abhängigkeit von allzu zahlreichen Parametern ohnehin ungenügend Aussagekraft besitzen würden. Lediglich als Richtwert sei vermerkt, dass es sich um die Laufschaufeln einer axialen einstufigen Gasturbine handelt, wie sie beispielsweise in Abgasturboladern Anwendung findet, dass die Beschaufelung 45 freistehende, nicht mit Binde- oder Dämpferdraht versehende Schaufeln umfasst mit einer Sehnenlänge von ca. 30 mm, und dass die Wandbohrungen 8 mm Durchmesser und 10 mm Tiefe aufweisen.

Zunächst erfolgt in der Resonanz eine Messung der Schaufelschwingungen bei verschlossenen Bohrungen. Diese Messung wird, wie an sich bekannt, mittels Dehnmessstreifen durchgeführt. Die anschliessende Fourier-Analyse ergibt die Erregungsordnung sowie die Ampitude und die Phasenlage der Schwingung. Im Beispielsfall sei angenommen, dass die Schwingung der 5ten und der 24ten Ordnung zu reduzieren seien. Diese ursprünglich vorhandenen Schwingungen sind im Falle der 5ten Ordnung in Fig. 5A mit dem strichlierten Vektor n0 und im Falle der 24ten Ordnung in Fig. 6A mit dem Vektor ñ0 eingetragen. Mit α ist in den Diagrammen jeweils der Phasenwinkel der Schwingung bezeichnet, mit n die Amplitude. Aus den Fig. 5A und 6A ist erkennbar, dass die ursprünglich vorhandenen Schwingungen der 5ten und der 24ten Ordnung unterschiedliche Phasenlage und Amplitude aufweisen.

Es wird nun eine der Bohrungen, beispielsweise die Bohrung Nr. 1, geöffnet und die Messung in der Resonanz wiederholt. Die wiederum durchgeführte Fourier-Analyse ergibt nunmehr die mit den strichpunktierten Vektoren dargestellten resultierenden Schwingungen nS in Fig. 5A resp. ñS in Fig. 6A.

Der Einfluss der Bohrung Nr. 1 kann nunmehr in den Diagrammen abgegriffen werden. Die Verschiebung von n0 auf nS sowie von ñ0 auf ñS ist der Wirkung der Bohrung 1 zuzuschreiben.

Amplitude und Phasenwinkel der Wirkzeiger n1 respektiv ñ1 sind somit bekannt.

Die Kenntnis des Wirkzeigers n1 ergibt aber zugleich die Kenntnis aller 12 Wirkzeiger n1 bis n12 und zwar aus folgenden Überlegungen: Die vorausgesetzte gleichmässige Verteilung der 12 Bohrungen über dem Umfang ergibt eine räumliche Staffelung der Bohrungen von 360° : 12 = 30°. Die 5te Erregungsordnung besagt, dass bei einer Rotorumdrehung die zu messende Schaufel fünfmal schwingt. Eine volle Schaufelschwingung erstreckt sich somit über 360° : 5 = 72 Winkelgrade. Die 30° räumlicher Abstand zwischen 2 Bohrungen entsprechen somit (360 : 72) x 30 = 150° Phasendifferenz. Mit diesen Erkenntnissen können nunmehr ausgehend vom ermittelten Wirkzeiger n1 die Wirkzeiger n2 bis n12 erstellt werden. Aus Fig. 5B ist ersichtlich, dass die Zeiger n2, n3, n4 usw. für die Bohrungen Nr. 2, 3, 4 gegenüber den Zeigern n1, n2, n3 usw. für die in Drehrichtung vorhergehenden Bohrungen Nr. 1, 2, 3 jeweils um 150° phasenverschoben sind.

Damit hat man nun das Mittel in der Hand, jene Kavitäten zu bestimmen, deren Öffnung geeignet ist, um beispielsweise die resonante Schwingung n0 der 5ten Ordnung zu reduzieren. Im vorliegenden Fall können gemäss Fig. 5C die Bohrungen Nr. 9 und Nr. 2 geöffnet werden. Durch blosse Vektoraddition der Zeiger n9 und n2 zum Zeiger n0 ergibt sich die resultierende Schwingung nS.

Ob diese gleiche Massnahme aber nunmehr geignet ist, auch die Schwingung der 24ten Ordnung zu reduzieren oder gar zu tilgen, steht zu diesem Zeitpunkt noch nicht fest. Der Vergleich der Zeigerdiagramme 6a mit 5a zeigt, dass die Wirkung ñ1 der Bohrung Nr 1 auf die Schwingung der 24ten Ordnung eine andere ist als deren Wirkung n1 auf die Schwingung der 5ten Ordnung.

Erstellt man nun das Wirkdiagramm für alle 12 Kavitäten, so ist gemäss Fig. 6B festzustellen, dass alle Kavitäten phasengleich wirken. Mit einer solchen Anordnung kann durch Öffnen der Bohrungen 2 und 9 somit keine Reduktion, sondern vielmehr eine weitere Anfachung der Schwingung erzielt werden. Abhilfe würde hier die Massnahme schaffen, alle 12 Bohrungen um einen Winkel zu verschieben, welcher im Betrag dem 24ten Teil des Phasenwinkels αV zwischen der ursprünglichen Schwingung ñ0 und ñ1 (-ñ12) entspricht. Dadurch entspräche die Phasenlage der wirksamen Zeiger ñ2 und ñ9 in umgekehrter Richtung (um 180° verdreht) jener der Schwingung ñ0, welche in der Folge zumindest teilweise getilgt würde.

Diese Verschiebung der Bohrungen hätte jedoch einen Einfluss auf die Schwingung der 5ten Ordnung, deren oben durchgeführte optimierte Dämpfung (mittels der Öffnung der Bohrungen 2 und 9) nun wieder in Frage gestellt wäre.

Dieser Sachverhalt wird nachstehend und in Abweichung von den in den Fig. 5 gewählten Beträgen für Amplitude und Phasenwinkel anhand der Fig. 7 und 8 erläutert.

Fig. 7 zeigt in der Abwicklung die 12 durchnumerierten Bohrungen über dem Umfang der Gehäusewandung. Der besseren Anschaulichkeit wegen sind die zu dämpfenden Schwingungen der 5ten und der 24ten Ordnung untereinander dargestellt. Gemäss Fig. 8A wird angenommen, dass der ermittelte Phasenwinkel der Schwingung n0 0° beträgt. Desweiteren wird angenommen, dass der Wirkzeiger n1 der ersten offenen Bohrung einen Phasenwinkel von 180° aufweist. Diese Annahme kann durchaus getroffen werden, wenn man sich einen verdrehbaren Gehäusering vorstellt und den Ring anlässlich der Messungen so lange verdreht, bis die in den Fourier-Analysen ermittelte resultierende Schwingung nS bei gleichbleibendem Phasenwinkel einen kleinere Amplitude aufweist als die ursprünglich vorhandene Schwingung n0 bei geschlossener Bohrung Nr.1.

In der Fig. 7 ist dies nun in der Art dargestellt, dass die Bohrung 1 sich in der Winkelebene befindet, in welcher die Auslenkung der ursprünglich vorhandenen Schwingung n0 den grössten Wert aufweist. Es soll an dieser Stelle festgehalten werden, dass die in Fig. 7 eingezeichneten Pfeile in der vertikalen Verlängerung der Bohrungen keineswegs als Kraftvektoren anzusehen sind. Unabhängig vom tätsächlichen Geschehen bezeichnen die vertikalen Pfeile nur die Lage der offenen Bohrungen und deren Phasenlage in Bezug auf die ursprünglich vorhandenen Schwingungen.

Im Beispielsfall sind nun die Bohrungen Nr. 1, 3, 6, 8 und 11 geöffnet, wie dies durch die schwarzen Pfeile dargestellt ist. Entsprechend den obigen Ausführungen muss der Phasenwinkel α3 des Wirkzeigers n3 somit gegenüber dem Phasenwinkel des Wirkzeigers n1 um (360° : 72) x (2 x 30) = 300° verschoben sein, bezogen auf die Schwingung nO. In Fig. 7 ist dies anhand des im Bereich der ersten Schwingung dargestellten Gradmessers, bei welchem jeder Teilstrich 15° entspricht, erkennbar. Die in Fig. 8A durchgeführte vektorielle Summierung der Wirkzeiger n0 + n1 + n3 + n6 + n8 + n11 ergibt die resultierende Schwingung nS. Erkennbar ist, dass eine noch grössere Reduzierung der ursprünglich vorhandenen Schwingung erzielbar wäre durch blosses Öffnen der Bohrungen 1, 3 und 6.

Ganz anders präsentiert sich die Öffnung der gleichen Bohrungen auf die Schwingung ñ0 der 24ten Ordnung. Gemäss Fig. 7 befindet sich die Bohrung 1 in der Winkelebene, in welcher die Auslenkung der ursprünglich vorhandenen Schwingung ñ0 den kleinsten Wert aufweist. Nach dem bisher Ausgeführten bedeutet dies, dass der Wirkzeiger ñ1 statt in entgegengesetzter Richtung in gleicher Richtung wirkt wie der Zeiger ñ0. Dieser Sachverhalt ist in Fig. 9 dargestellt, wobei zur Verdeutlichung angenommen wird, dass der Wirkzeiger ñ1 gegenüber der ursprünglich vorhandenen Schwingung ñO leicht phasenverschoben sei. Dies hat zur Folge. dass die Schwingung nicht reduziert, sondern durch die Wirkung der Bohrung Nr. 1 sogar noch angefacht würde. Dies gilt selbstverständlich umsomehr, was die Summenwirkung der gemäss Beispiel offenen Bohrungen 1, 3, 6, 8 und 11 betrifft, wie der Zeiger ñS'= ñO + ñ1' + ñ3' + ñ6' + ñ8' + ñ11' zeigt.

Abhilfe schafft hier die Verschiebung der 12 Bohrungen in der Art, dass der Wirkzeiger der Zusatzerregung um 180° gedreht wird. Bei 24 Schwingungen pro Umdrehung bedeutet dies eine Verschiebung der Bohrungen um (360 : 24) : 2 = 7,5°. In Fig. 7 ist dieser Wert mit X eingezeichnet. Die strichlierte Gehäusewandung zeigt die derart versetzten Bohrungen. Die ursprünglich vorhandene Schwingung wird durch diese Massnahme im "richtigen" Sinn beeinflusst, wie die resultierende Schwingung ñS in Fig.9 erkennen lässt. Die Anzahl der zu öffnenden Bohrungen richtet sich nach dem Mass der gewünschten Amplitudenreduktion, wobei selbstverständlich der Einfluss der offenen Bohrungen auf die weiteren zu reduzierenden Schwingungen zu beachten bleibt. Denn es gilt zwar, die Amplitude der 24ten Ordnung zu reduzieren, jedoch ohne dabei eine Zusatzanregung in der 5ten Ordnung zu bewirken.

Denn diese Verschiebung der Bohrungen um den Betrag X wirkt sich zwangsläufig auf die Schwingung der 5ten Ordnung aus. Bezogen auf diese Schwingung ist die Wirkung der Bohrung Nr. 1 nunmehr um (360 : 72) x 7,5 = 37,5° phasenverschoben, wie dies anhand des Gradmessers in Fig. 7 erkennbar ist. Dementsprechend müssen gemäss Fig. 8B die Wirkzeiger aller beteiligten Bohrungen 1, 3, 6, 8 und 11 ebenfalls um diese 37,5° phasenverschoben werden. Es resultiert eine Schwingung nS', die gegenüber der Schwingung n0 zwar phasenverschoben ist, sich im Betrag jedoch nur unwesentlich von letzterer unterscheidet. Dies ist insbesondere bedingt durch den Wirkzeiger n11, der in diesem besonderen Fall in eine völlig falsche Richtung zeigt.

Um also die Schwingung der 5ten Ordnung im gewünschten Sinne zu beeinflussen, d.h. in der Amplitude zu reduzieren, wird man in diesem Fall die Bohrung 11 verschliessen und stattdessen die Bohrung 10 öffnen. In der Summe ergibt sich danach gemäss Fig. 8B der resultierende Wirkzeiger nS, der im Betrag ähnlich demjenigen in Fig. 8A ist. Diese Änderung der Bohrung hat keinen Einfluss auf die Schwingung der 24ten Ordnung, da ja, wie bereits ausgeführt, die dort wirksamen Zeiger ñ1 bis ñ12 alle phasengleich sind.

Letztere Erkenntnis lehrt ebenfalls, dass es möglich ist, die Amplitude der 24ten Ordnung massgeblich zu beeinflusssen durch Öffnen einer Anzahl von Bohrungen, die in Bezug auf die 5te Ordnung gegenphasig wirken und dort anregungsneutral sind. Gemäss Zeigerdiagramm 5B sind dies beispielsweise die Bohrungspaare 1 + 7 oder 2 + 8 oder 3 + 9 usw.

Es versteht sich, dass die Erfindung nicht auf die gezeigten und beschriebenen Ausführungsbeispiele beschränkt ist. In analoger Weise lässt sich die Erfindung mit Erfolg auf alle eingangs erwähnten Turbomaschinen der axialen oder radialen Bauart anwenden.

### Bezugszeichenliste

- 1 - 12: Kavität
- 13: Sackloch
- 14: Durchgangsloch
- 15: geschlossenes Rohr in Durchgangsloch
- 16: offenes Rohr in Durchgangsloch
- 17: auf einer Linie angeordnete Einzelbohrungen
- 18: auf einer Kurve angeordnete Einzelbohrungen
- 19, 19': gerade Nut
- 20: gekrümmte Nut
- 21: Laufschaufel
- 22: Gehäusewandung
- 23: Eintrittskante
- 24: Austrittskante

- n0, ñ0: Wirkzeiger der ursprünglich vorhandenen Schwingung
- n1 - n12, ñ - ñ12: Wirkzeiger der Zusatzschwingungen
- nS, ñS: Wirkzeiger der resultierenden Schwingung
- α: Phasenwinkel

## Patentansprüche

1. Vorrichtung zum Reduzieren einer oder mehrerer resonanter Schwingungen von Laufschaufeln (21) in Turbomaschinen, wobei Mittel zur gezielten Störung der Strömung zwischen rotierender Schaufelspitze und der den Strömungskanal begrenzenden Wandung (22) des Gehäuses angeordnet sind, wobei diese Mittel im Bereich der Schaufelspitzen in der Gehäusewandung (22) angeordnet sind und mindestens eine über den Umfang der Gehäusewandung (22) angeordnete Kavität (1-20) umfassen, deren zum Strömungskanal gerichteter offener Querschnitt zumindest teilweise zwischen den von Eintrittskante und Austrittskante der Laufschaufeln (21) begrenzten Axialebenen angeordnet ist,
dadurch gekennzeichnet,
dass die Kavitäten im Gehäuse verlaufende, offene oder einseitig geschlossene Bohrungen (13, 14) sind, deren Querschnitt vollständig auf die innerhalb der von der Schaufeleintrittskante und der Schaufelaustrittskante anlässlich der Drehung gebildeten Mantelfläche gerichtet ist.

2. Vorrichtung zum Reduzieren einer oder mehrerer resonanter Schwingungen von Laufschaufeln (21) in Turbomaschinen, wobei Mittel zur gezielten Störung der Strömung zwischen rotierender Schaufelspitze und der den Strömungskanal begrenzenden Wandung (22) des Gehäuses angeordnet sind, wobei diese Mittel im Bereich der Schaufelspitzen in der Gehäusewandung (22) angeordnet sind und mindestens eine über den Umfang der Gehäusewandung (22) angeordnete Kavität (1-20) umfassen, deren zum Strömungskanal gerichteter offener Querschnitt zumindest teilweise zwischen den von Eintrittskante und Austrittskante der Laufschaufeln (21) begrenzten Axialebenen angeordnet ist,
dadurch gekennzeichnet,
dass die Kavitäten gerade oder gekrümmte Langnuten (19, 19', 20) sind, die zumindest annähernd in Sehnenrichtung der Laufschaufeln (21) verlaufen.

3. Vorrichtung nach Anspruch 1, dadurch gekennzeichnet, dass die Bohrungen paketweise angeordnet sind, wobei ein Paket mehrere Einzelbohrungen (17, 18) aufweist, die zumindest annähernd in Sehnenrichtung der Laufschaufeln (21) verlaufen.

4. Verfahren zum Betreiben der Vorrichtung nach Anspruch 1 oder 2, dadurch gekennzeichnet, dass die die Resonanz verursachende Drehfrequenz ermittelt wird, und dass bei einer zu unterdrückenden Schaufelschwingung, die mit der k-ten Drehfrequenz des Läufers angeregt wird, die die Strömung störenden Kavitäten (1-20) so über den Umfang der Gehäusewandung (22) verteilt werden, dass eine Anregung mit der k-ten Vielfachen der Drehfrequenz erfolgt, wobei die Winkellagen der in Umfangrichtung der Gehäusewandung (22) aufeinanderfolgenden Kavitäten in der Summe so gewählt werden, dass die Schaufelschwingungen reduziert werden.

5. Verfahren nach Anspruch 4 zum Betreiben der Vorrichtung nach Anspruch 1, dadurch gekennzeichnet, dass im Falle von offenen Bohrungen ein gasförmiges Mittel auf die Laufschaufelspitzen geblasen wird.

## Claims

1. Device for reducing one or more resonant vibrations of rotor blades (21) in turbomachines, means being provided for the selective disturbance of the flow between the rotating blade tip and that wall (22) of the casing which bounds the flow duct, these means being arranged in the casing wall (22) in the region of the blade tips and comprising at least one cavity (1-20), which is arranged over the circumference of the casing wall (22) and the open cross-section of which facing the flow duct is arranged at least partially between the axial planes bounded by the inlet edge and the outlet edge of the rotor blades (21), characterized in that the cavities are holes (13, 14) which extend in the casing, are open or closed on one side and the cross-section of which is directed completely at the within the [sic] circumferential surface formed by the blade inlet edge and the blade outlet edge during the rotation.

2. Device for reducing one or more resonant vibrations of rotor blades (21) in turbomachines, means being provided for the selective disturbance of the flow between the rotating blade tip and that wall (22) of the casing which bounds the flow duct, these means being arranged in the casing wall (22) in the region of the blade tips and comprising at least one cavity (1-20), which is arranged over the circumference of the casing wall (22) and the open cross-section of which facing the flow duct is arranged at least partially between the axial planes bounded by the inlet edge and the outlet edge of the rotor blades (21), characterized in that the cavities are straight or curved longitudinal grooves (19, 19', 20) which extend at least approximately in the direction of the chords of the rotor blades (21).

3. Device according to Claim 1, characterized in that the holes are arranged in groups, a group having a plurality of individual holes (17, 18) which extend at least approximately in the direction of the chords of the rotor blades (21).

4. Method of operating the device according to Claim 1 or 2, characterized in that the rotary frequency causing the resonance is determined and in that, in the case of a blade vibration to be suppressed, excited by the k^{th} rotary frequency of the rotor, the cavities (1-20) disturbing the flow are distributed over the circumference of the casing wall (22) in such a way that an excitation with the k^{th} multiple of the rotary frequency takes place, the sum of the angular positions of the successive cavities in the circumferential direction of the casing wall (22) being chosen so that the blade vibrations are reduced.

5. Method according to Claim 4 for operating the device according to Claim 2, characterized in that, in the case of open holes, a gaseous medium is blown onto the tips of the rotor blades.

## Revendications

1. Dispositif pour réduire une ou plusieurs vibrations de résonance d'aubes mobiles (21) dans des turbomachines, dans lequel des moyens de perturbation appropriée de l'écoulement sont disposés entre la pointe tournante des aubes et la paroi (22) du corps délimitant le canal d'écoulement, dans lequel ces moyens sont disposés dans la paroi (22) du corps dans la région de la pointe des aubes et comprennent au moins une cavité (1-20) disposée sur le pourtour de la paroi du corps (22), dont la section transversale ouverte orientée vers le canal d'écoulement est disposée au moins en partie entre les plans axiaux limités par l'arête d'entrée et l'arête de sortie des aubes mobiles (21), caractérisé en ce que les cavités sont des trous (13, 14) ménagés dans le corps, ouverts ou fermés d'un côté, dont la section transversale est dirigée entièrement vers la et à l'intérieur de la surface latérale formée par l'arête d'entrée de l'aube et l'arête de sortie de l'aube pendant la rotation.

2. Dispositif pour réduire une ou plusieurs vibrations de résonance d'aubes mobiles (21) dans des turbomachines, dans lequel des moyens de perturbation appropriée de l'écoulement sont disposés entre la pointe tournante des aubes et la paroi (22) du corps délimitant le canal d'écoulement, dans lequel ces moyens sont disposés dans la paroi (22) du corps dans la région de la pointe des aubes et comprennent au moins une cavité (1-20) disposée sur le pourtour de la paroi du corps (22), dont la section transversale ouverte orientée vers le canal d'écoulement est disposée au moins en partie entre les plans axiaux limités par l'arête d'entrée et l'arête de sortie des aubes mobiles (21), caractérisé en ce que les cavités sont des rainures allongées rectilignes ou courbes (19, 19', 20), qui sont orientées au moins approximativement dans la direction de la corde des aubes mobiles (21).

3. Dispositif suivant la revendication 1, caractérisé en ce que les trous sont disposés par groupes, un groupe présentant plusieurs trous individuels (17, 18), qui sont orientés au moins approximativement dans la direction de la corde des aubes mobiles (21).

4. Procédé pour la conduite du dispositif suivant la revendication 1 ou 2, caractérisé en ce que l'on détermine la fréquence de rotation provoquant la résonance, en ce que, pour une vibration d'aube à combattre, qui est suscitée par la k-ième fréquence de rotation du rotor, les cavités (1-20) perturbant l'écoulement sont réparties sur le pourtour de la paroi du corps (22) de telle manière qu'il se produise une excitation avec le k-ième multiple de la fréquence de rotation, les positions angulaires des cavités qui se succèdent en direction périphérique de la paroi du corps (22) étant choisies en valeur cumulée de façon telle que les vibrations des aubes soient réduites.

5. Procédé suivant la revendication 4 pour la conduite du dispositif suivant la revendication 1, caractérisé en ce que, dans le cas de trous ouverts, on souffle avec un agent gazeux sur les pointes des aubes mobiles.
